# FASCICULE DE BREVET EUROPEEN

(11) **EP 4 366 931 B1**
(45) Date de publication et mention de la délivrance du brevet: **12.03.2025**
(21) Numéro de dépôt: 22747017.6
(22) Date de dépôt: 08.07.2022
(51) Int. Cl.: B29C 49/42, B29C 31/00, B65G 23/23, B65G 47/90

(54) **DISPOSITIF DE CONVOYAGE DE PREFORMES**
VORRICHTUNG ZUM TRANSPORT VON VORFORMLINGEN
DEVICE FOR CONVEYING PREFORMS

(30) Priorité: 09.07.2021 FR 2107455
(43) Date de publication de la demande: 15.05.2024
(73) Titulaire: Sidel Participations, 76930 Octeville-sur-Mer (FR)
(72) Inventeur: CHOMEL, Nicolas, 76930 Octeville-sur-Mer (FR); MAZO, Eric, 76930 Octeville-sur-Mer (FR); MOUCHELET, Marc, 76930 Octeville-sur-Mer (FR); GIRODIT, Guillaume, 76930 Octeville-sur-Mer (FR); GARIOU, David, 76930 Octeville-sur-Mer (FR)
(74) Mandataire: Sidel Group
(86) Numéro de dépôt international: PCT/EP2022/069155
(87) Numéro de publication internationale: WO 2023/281087

(56) Documents cités:
- DE-A1- 4 133 114
- US-A1- 2015 079 220
- US-A1- 2019 210 264

## Description

### Domaine technique de l'invention

L'invention concerne un dispositif de convoyage de corps creux comportant :
- au moins une navette qui embarque au moins un organe de préhension d'un corps creux ;
- au moins un organe de guidage pour guider les déplacements de la navette dans une direction de déplacement le long d'un trajet de convoyage par contact, selon une direction d'appui, avec au moins un organe d'appui embarqués par la navette ;
- au moins un mécanisme d'entraînement par contact de chaque navette le long d'au moins un tronçon d'entraînement par contact du trajet de convoyage, le mécanisme d'entraînement comportant au moins un organe de poussée mobile qui pousse par contact la navette dans la direction de déplacement le long du trajet de convoyage.

### Arrière-plan technique

La fabrication de récipients en matière thermoplastique, tels que des bouteilles, flacons, etc. est généralement effectuée à partir de préformes, parfois appelées ébauches, qui sont introduites dans un dispositif de moulage auquel sont associés des moyens de formage, par exemple de soufflage ou d'étirage-soufflage.

Dans la suite de la description et dans les revendications, on emploiera le terme "corps creux" pour désigner indifféremment une préforme ou un récipient fini.

De manière traditionnelle dans ce domaine technique, la préforme et le récipient fini présentent un goulot ou col identique. De ce fait, un même organe de préhension d'une préforme par son col est aussi adapté pour saisir un récipient fini.

Avant d'être conformées en récipient final, les préformes subissent plusieurs traitement au long d'un parcours de défilement. Les préformes peuvent ainsi subir un traitement de chauffage, un traitement de stérilisation et un formage.

L'installation de fabrication de récipients est alimentée avec des préformes qui ne sont pas en état d'être directement formées. Préalablement à leur moulage par soufflage ou étirage-soufflage, les préformes sont donc chauffées dans une station de chauffage de manière à conférer à leur corps une consistance suffisamment malléable pour l'opération de soufflage.

De telles installations de fabrication en grande série de récipients sont équipées d'une station de chauffage comportant un tunnel de chauffage muni des moyens de chauffage des préformes. Les préformes sont généralement transportées le long du tunnel à grande vitesse sans marquer d'arrêt par un dispositif de convoyage. Le tunnel présente une longueur suffisante pour permettre le chauffage des préformes durant leur traversée.

Le dispositif de convoyage comporte des organes de préhension individuelle de préforme qui défilent le long d'un trajet de convoyage en boucle dont un tronçon transporte les préformes le long du tunnel de chauffage. Les organes de préhension sont généralement formés par des mandrins qui sont susceptibles d'entraîner la préforme transportée en rotation autour de son axe pour garantir une chauffe homogène de la préforme.

Par ailleurs, les préformes à chauffer sont amenées les unes après les autres par une roue d'entrée jusqu'à une zone d'entrée dans la station de chauffage. Sur cette roue d'entrée, deux préformes successives sont espacées d'un premier écartement déterminé.

De même, à la sortie de la station de chauffage, les préformes chaudes sont transférées vers une roue de sortie sur laquelle deux préformes successives sont espacées d'un deuxième écartement déterminé. Le deuxième écartement est généralement égal au premier écartement.

Pour réaliser ces opérations de convoyage, les organes de préhension sont généralement supportés par les maillons d'une chaîne de convoyage qui est entraînée en mouvement le long du parcours de chauffe, par exemple par des roues dentées.

Cependant, lorsque les préformes défilent dans le tunnel de chauffage avec un écartement trop important entre deux préformes, une partie du rayonnement chauffant est dépensé en pure perte en passant entre les préformes.

Selon un autre inconvénient des dispositifs de convoyage connus, lorsqu'un organe de préhension présente un dysfonctionnement, ou encore lorsqu'il nécessite une action de maintenance préventive ou un nettoyage, il est nécessaire d'interrompre le fonctionnement du dispositif de convoyage dans son ensemble pour qu'un opérateur puisse réaliser une opération de maintenance, tel qu'une réparation ou un remplacement de l'organe de préhension. Une telle interruption entraîne une mise en veille de la totalité de l'installation de fabrication, et par conséquent, un arrêt momentané de la production de récipients. Ceci peut avoir des conséquences financières négatives pour le fabricant de récipients.

Pour résoudre ces problèmes, il est déjà connu de remplacer les chaînes de convoyage par des moteurs synchrones linéaires, qui seront appelés par la suite et dans les revendications "moteurs linéaires", comportant des navettes indépendantes les unes des autres qui sont guidées par une piste de guidage le long du trajet de convoyage. tel que dans le document US 2015079220. Les déplacements de chaque navette sont commandés individuellement au moyen d'un moteur linéaire comportant au moins un aimant embarqué par chaque navette et une voie magnétique fixe par rapport à la piste de guidage émettant un champ magnétique commandé. Les navettes sont ainsi susceptibles d'être écartées ou rapprochées les unes des autres sur différents tronçons de leur trajet.

Cependant, un tel moteur linéaire est particulièrement onéreux.

En outre, on a observé que les avantages conférés par les moteurs linéaires n'étaient pas exploités sur certaines portions du parcours de transport.

### Résumé de l'invention

L'invention propose un dispositif de convoyage de corps creux, pour une installation de fabrication de récipients, le dispositif de convoyage comportant :
- au moins une navette qui embarque au moins un organe de préhension d'un corps creux ;
- au moins un organe de guidage pour guider les déplacements de la navette dans une direction de déplacement le long d'un trajet de convoyage par contact, selon une direction d'appui, avec au moins un organe d'appui embarqués par la navette ;
- au moins un mécanisme d'entraînement par contact de chaque navette le long d'au moins un tronçon d'entraînement par contact du trajet de convoyage, le mécanisme d'entraînement comportant au moins un organe de poussée mobile qui pousse par contact la navette dans la direction de déplacement le long du trajet de convoyage ;
caractérisé en ce qu'il comporte au moins une bande de matériau ferromagnétique qui est agencée le long du tronçon d'entraînement par contact pour produire, par interaction magnétique avec au moins un aimant embarqué par chaque navette, une force d'attraction suffisante pour maintenir la navette en appui permanent contre les organes de guidage selon la direction d'appui orthogonale à la direction de déplacement.

Selon un autre aspect de l'invention, la navette est en contact unilatéral permanent contre au moins un organe de guidage selon la direction d'appui par l'intermédiaire d'au moins un organe d'appui embarqué.

Selon un autre aspect de l'invention, au moins un organe de guidage est formé par une piste d'au moins un rail de guidage.

Selon un autre aspect de l'invention, le long du tronçon d'entraînement par contact, au moins un organe de guidage est porté par un organe de poussée.

Selon un autre aspect de l'invention, le dispositif de convoyage comporte au moins un moteur linéaire pour déplacer les navettes le long d'au moins un tronçon d'entraînement magnétique du trajet de convoyage, le moteur linéaire comportant une voie magnétique agencée le long dudit tronçon et ledit au moins un aimant embarqué par chaque navette, la voie magnétique étant susceptible d'émettre un champ magnétique commandé qui interagit avec l'aimant pour produire une force motrice de déplacement de la navette le long du trajet de convoyage et pour produire une force d'attraction de la navette contre les rails de guidage selon la direction d'appui.

Selon un autre aspect de l'invention, la navette est guidée par contact permanent d'au moins un organe de maintien embarqué avec un organe de support selon au moins une direction de support orthogonale aux directions d'appui et de déplacement.

Selon un autre aspect de l'invention, le dispositif de convoyage comporte deux rails de guidage parallèles qui s'étendent de part et d'autre de la voie magnétique et de la bande en matériau ferromagnétique selon les directions de support.

Selon un autre aspect de l'invention, au moins un organe d'appui est formé par un galet de roulement.

Selon un autre aspect de l'invention, la navette embarque au moins deux galets de roulement, formant des organes d'appui, dont chacun roule sur une piste d'un rail de guidage associé qui est tourné dans une direction opposée à la direction d'appui.

Selon un autre aspect de l'invention, la navette embarque au moins deux galets de roulement, formant des organes de maintien, dont chacun roule sur un chemin de support d'un rail de guidage associé.

Selon un autre aspect de l'invention, l'au moins une direction de support est dirigée globalement parallèlement au sens de la gravité terrestre.

Selon un autre aspect de l'invention, le tronçon d'entraînement par contact du trajet de convoyage présente une forme d'arc de cercle, le mécanisme d'entraînement par contact étant formé par au moins une roue motorisée centrée sur le centre de giration du tronçon d'entraînement par contact, les organes de poussée étant montés solidaires en rotation avec la roue motorisée.

Selon un autre aspect de l'invention, chaque organe de poussée est formé par des bords d'au moins une fourchette qui coopère par engrènement avec au moins un organe de saisie complémentaire de chaque navette.

Selon un autre aspect de l'invention, un fond de la fourchette forme un organe de guidage qui coopère avec un organe d'appui embarqué par la navette.

### Brève description des figures

D'autres caractéristiques et avantages de l'invention apparaitront au cours de la lecture de la description détaillée qui va suivre pour la compréhension de laquelle on se reportera aux dessins annexés décrits succinctement ci-dessous.
La [Fig.1] est une vue de dessus qui représente schématiquement une installation de fabrication de récipient comportant une station de chauffage équipée d'un dispositif de convoyage réalisé selon les enseignements de l'invention.
La [Fig.2] est une vue en perspective qui représente un tronçon du trajet de déplacement de navettes du dispositif de convoyage de la [Fig.1] pris dans un tronçon de virage du trajet dans lequel les navettes sont déplacées par un mécanisme d'entraînement par contact.
La [Fig.3] est une vue en coupe transversale verticale selon le plan de coupe 3-3 de la [Fig.1] qui représente la navette de la [Fig.2] en cours de déplacement le long du tronçon de virage.
La [Fig.4] est une vue en perspective qui représente un tronçon du trajet de déplacement de navettes du dispositif de convoyage de la [Fig.1] pris dans un tronçon rectiligne du trajet le long duquel les navettes sont déplacées par un moteur linéaire.
La [Fig.5] est une vue en coupe transversale verticale selon le plan de coupe 5-5 de la [Fig.1] qui représente la navette de la [Fig.4] en cours de déplacement le long du tronçon rectiligne.
La [Fig.6] est une vue de dessus qui représente une portion d'un roue motorisée comportant des fourchettes permettant d'entraîner les navettes en déplacement le long de tronçons d'entraînement par contact de leur trajet.

### Description détaillée de l'invention

Dans la suite de la description, des éléments présentant une structure identique ou des fonctions analogues seront désignés par des mêmes références.

Dans la suite de la description, on adoptera à titre non limitatif un repère local à chaque navette 22 comportant une direction longitudinale "L", dirigée d'arrière en avant selon le sens de déplacement des navettes 22 le long de leur trajet 36 de convoyage, une direction verticale "V", dirigée de bas en haut orthogonalement au plan de déplacement des navettes 22, et une direction transversale "T" qui est perpendiculaire aux deux directions précédentes.

Dans la suite de la description, les termes "amont" et "aval" seront utilisés en référence au sens de déplacement des navettes 22.

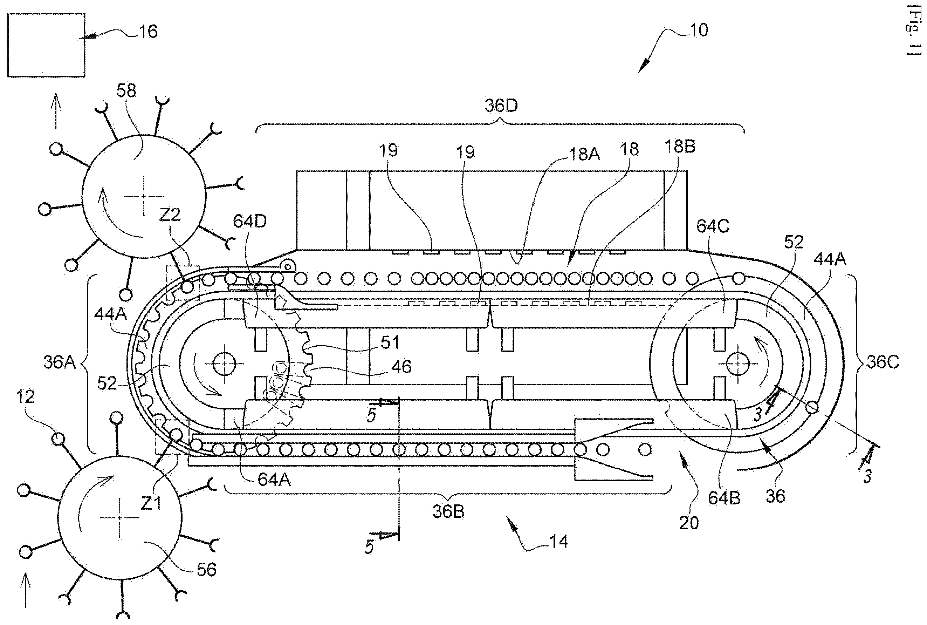

On a représenté à la [Fig.1] une partie d'une installation 10 de fabrication en grandes séries de récipients en matériau thermoplastique tel que du polyéthylène téréphtalate ou PET. L'installation 10 de fabrication est ici destinée à former des récipients à partir de préformes 12 à chauffer.

L'installation 10 de fabrication comporte plusieurs stations de traitement. On a notamment représenté aux figures une station 14 de chauffage des préformes 12 et une station 16 de formage, ici par soufflage ou étirage-soufflage, des préformes 12 préalablement chauffées par ladite station 14 de chauffage. On comprendra que l'installation 10 de fabrication peut aussi comporter des stations de décontamination des préformes 12, ou encore d'autres stations de traitement bien connues de l'homme du métier pour ce type d'application.

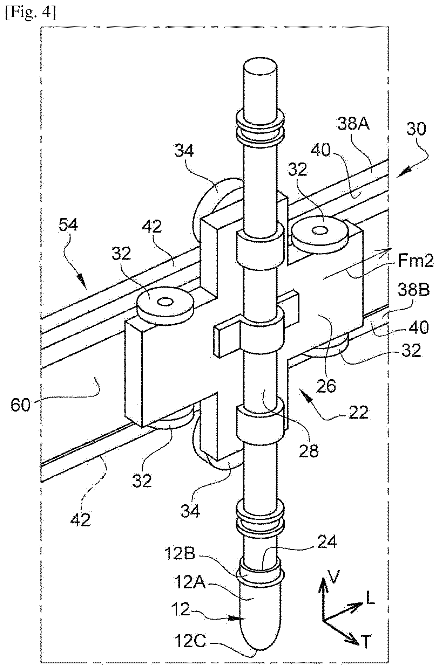

En référence à la [Fig.4], chaque préforme 12 comporte un corps 12A tubulaire qui s'étend selon un axe "A" principal, représenté ici verticalement. Le corps 12A est ouvert vers le haut par un col 12B et fermé vers le bas par un fond 12C. Généralement, seul le corps 12A de la préforme 12 est destiné à être chauffé et étiré pour former le récipient final. Le col 12B de la préforme 12 présente généralement déjà sa forme finale. A cet égard, le col 12B est généralement maintenu à une température suffisamment basse dans la station 14 de chauffage pour éviter sa déformation pendant de la fabrication du récipient.

La station 14 de chauffage comporte au moins un tunnel 18 de chauffage. Dans l'exemple représenté schématiquement à la [Fig.1], la station 14 de chauffage comporte un seul tunnel 18 de chauffage.

Classiquement, un tel tunnel 18 de chauffage est délimité par deux parois 18A, 18B latérales verticales. Au moins l'une des parois 18A, 18B est munie d'émetteurs 19 de radiations chauffant le corps 12A des préformes 12. Le tunnel 18 de chauffage est bordé d'une série d'émetteurs 19 de radiations adjacents, par exemple deux rangées d'émetteurs 19 de radiations en regard l'une de l'autre.

Dans l'exemple représenté à la [Fig.1], chaque émetteur 19 de radiation est équipé de sources de rayonnement électromagnétique monochromatique (notamment des lasers), dont le spectre d'émission s'étend pour l'essentiel dans le domaine de l'infrarouge.

En théorie, une source monochromatique est une source idéale émettant une onde sinusoïdale de fréquence unique. En d'autres termes, son spectre en fréquence est constitué d'une seule raie de largeur spectrale nulle. Dans la pratique, une telle source n'existe pas, une source réelle ayant un spectre d'émission en fréquence qui s'étend sur une bande de largeur spectrale faible mais non nulle, centrée sur une fréquence principale où l'intensité du rayonnement est maximale. Pour les besoins de la présente demande, on considère comme monochromatique une telle source réelle. De même, pour les besoins de la présente description, on considère comme monochromatique une source multimode, c'est-à-dire émettant sur un spectre discret comprenant plusieurs bandes étroites centrées sur des fréquences principales distinctes.

L'avantage d'un rayonnement monochromatique est que, bien choisi, il peut être concentré sur une (ou plusieurs) fréquence(s) pour laquelle (ou pour lesquelles) le comportement thermique du matériau des préformes 12 est, en termes d'absorption, particulièrement intéressant.

A titre d'exemple, pour obtenir une chauffe rapide en surface des préformes 12, on peut choisir une (ou plusieurs) fréquence(s) dans l'infrarouge pour laquelle (pour lesquelles) le matériau est très absorbant. A contrario, pour obtenir une chauffe plus lente mais plus homogène dans l'épaisseur des préformes 12, on peut choisir une (ou plusieurs) fréquence(s) pour laquelle (pour lesquelles) le matériau est relativement moins absorbant.

En pratique, les sources dont sont pourvus les émetteurs 19 de radiation sont des lasers (par exemple des diodes laser) émettant un faisceau laser dans l'infrarouge. Ces émetteurs 19 de radiation sont radiants, c'est-à-dire que le rayonnement émis est transmis aux préformes 12 sans que l'air serve de vecteur de transmission.

Une station 14 de chauffage fonctionnant à l'aide de cette technologie présente de nombreux avantages par rapport à un four classique à lampes halogènes. Entre autres, dans ce type de station 14 de chauffage :
- les émetteurs 19 de radiation rayonnent dans l'infrarouge sans diffusion de chaleur, ce qui, à la différence d'un four halogène, rend inutile toute ventilation ;
- les préformes 12 peuvent être chauffées selon des profils thermiques plus précis ;
- aucune préchauffe n'est nécessaire.

La longueur du tunnel 18 de chauffage et la puissance des émetteurs 19 de radiation sont adaptées pour que les préformes 12 ressortent chauffées à une température suffisante pour leur formage par la station 16 de formage.

En variante non représentée, l'invention est aussi applicable à un tunnel de chauffage dont les émetteurs sont formés par des lampes halogènes émettant un rayonnement chauffant, par exemple un rayonnement infrarouge. Dans ce cas, la durée de chauffage des préformes est généralement plus longue qu'avec des émetteurs lasers. La station de chauffage peut donc comporter deux tunnels de chauffage. Pour gagner de la place, ces deux tunnels de chauffage sont généralement agencés parallèlement.

La station 14 de chauffage comporte aussi un dispositif 20 de convoyage qui est destiné à transporter chaque préforme 12 le long d'un itinéraire qui passe à travers le tunnel 18 de chauffage.

Le dispositif 20 de convoyage est ici agencé dans la station 14 de chauffage et adapté au convoyage de préformes 12. On comprendra qu'un tel dispositif 20 de convoyage peut être agencé à d'autres endroits de l'installation de fabrication et qu'il peut être adapté pour le transport de corps creux de manière général.

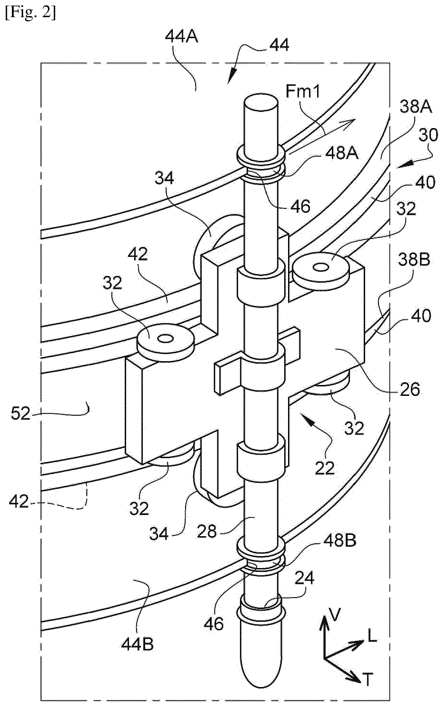

Comme représenté aux figures 2 à 5, le dispositif 20 de convoyage comporte au moins une navette 22 qui embarque au moins un organe 24 de préhension d'une préforme 12. Bien qu'il puisse fonctionner avec une seule navette 22, le dispositif 20 de convoyage comporte de préférence une pluralité de navettes 22 pour pouvoir fabriquer rapidement des récipients en grande série.

Les navettes 22 sont indépendantes les unes des autres.

Toutes les navettes 22 étant identiques, on décrira l'invention en référence à une seule des navettes 22 équipant le dispositif 20 de convoyage.

Chaque organe 24 de préhension est apte à transporter individuellement une préforme 12. Chaque navette 22 est ici équipée d'un unique organe 24 de préhension. Ainsi, chaque navette 22 est apte à transporter une seule préforme 12.

En variante de l'invention non représentée, chaque navette comporte plusieurs organes de préhension, par exemple deux ou trois, de manière à améliorer la capacité de préformes susceptibles d'être prise en charge par le dispositif de convoyage sans augmenter le nombre de navettes. Dans ce cas, les organes de préhension embarqués par une même navette peuvent être montés sur un support articulés de la navette pour permettre de réduire le pas entre deux préformes lors de leur passage dans le tunnel de chauffage puis d'augmenter ce pas lors du passage des préformes dans d'autres parties du trajet de convoyage.

L'organe 24 de préhension est ici adapté pour porter la préforme 12 associée debout, tête en haut ou tête en bas, de manière que l'axe "A" principal de la préforme 12 s'étendent verticalement.

A titre non limitatif, l'organe 24 de préhension est ici formé par un mandrin qui est inséré verticalement dans le col 12B de la préforme 12. Le mandrin est susceptible d'être inséré axialement dans le col 12B du récipient avec un ajustement serré pour assurer la préhension de la préforme 12 par frottement avec la paroi interne du col 12B.

En variante non représentée, l'organe de préhension est formé par un mandrin qui est susceptible de saisir le col de la préforme par sa face externe.

L'organe 24 de préhension est ici en outre monté rotatif autour de l'axe "A" principal de la préforme 12 et/ou coulissant le long dudit axe "A" principal.

L'organe 24 de préhension est par exemple monté coulissant verticalement sur un châssis 26 de la navette 22 entre une position basse de préhension de la préforme 12, comme représenté aux figures 2 à 5, et une position haute d'éjection de la préforme 12 (non représentée). Le coulissement est par exemple commandé par un moteur électrique ou par un système de came (non représenté). A cet effet, l'organe 24 de préhension est monté coulissant à une extrémité, ici à l'extrémité inférieure, d'un arbre 28, coaxial à l'axe "A" principal de la préforme 12.

En outre, pour permettre de maîtriser le profil de chauffage du corps 12A de la préforme 12 autour de l'axe "A" principal, l'organe 24 de préhension est monté à rotation sur le châssis 26 de la navette 22 autour de son axe "A" principal. L'organe 24 de préhension est ici solidaire en rotation de l'arbre 28 et l'arbre 28 est monté rotatif sur le châssis 26 de la navette 22.

Le dispositif 20 de convoyage comporte aussi des moyens de guidage de la navette 22 qui coopèrent par contact avec la navette 22 pour la guider dans une direction de déplacement le long d'un trajet 36 de convoyage. Toutes les navettes 22 défilent le long dudit trajet 36 de convoyage.

Le trajet 36 de convoyage s'étend ici dans un plan horizontal. Ainsi, la direction de déplacement de chaque navette 22 est orthogonale à l'axe "A" de chaque préforme 12.

En se reportant à la [Fig.1], le trajet 36 de convoyage présente ici la forme d'un circuit fermé. Il comporte un premier tronçon 36B rectiligne et un deuxième tronçon 36D rectiligne qui sont joints par un premier tronçon 36A de virage et un deuxième tronçon 36C de virage qui sont en forme de demi-cercles. Les deux tronçons 36B, 36D rectilignes sont ici parallèles.

En variante non représentée de l'invention, les tronçons rectilignes du trajet de convoyage ne sont pas parallèles.

Selon une autre variante de réalisation de l'invention, le trajet de convoyage peut comporter un nombre différent de tronçons rectilignes et de tronçons de virage.

Dans le mode de réalisation représenté aux figures, dans lequel les émetteurs 19 de radiations sont des émetteurs 19 laser, le tunnel 18 de chauffage est agencé sur le deuxième tronçon 36D rectiligne.

En variante non représentée de l'invention, lorsque la station de chauffage est équipée d'émetteurs de type halogène, les deux tronçons rectilignes du trajet de convoyage passent chacun à travers un tunnel de chauffage.

Le trajet 36 de convoyage dessert ici uniquement la station 14 de chauffage.

Comme cela sera expliqué plus en détails par la suite, le trajet 36 de convoyage est divisé en au moins un tronçon d'entraînement magnétique, le long duquel chaque navette 22 est entraînée en déplacement par un moteur linéaire, et en au moins un tronçon d'entraînement par contact, le long duquel chaque navette 22 est poussée par contact physique avec un organe de poussée motorisé.

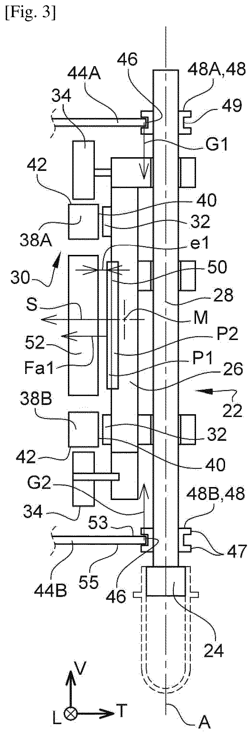

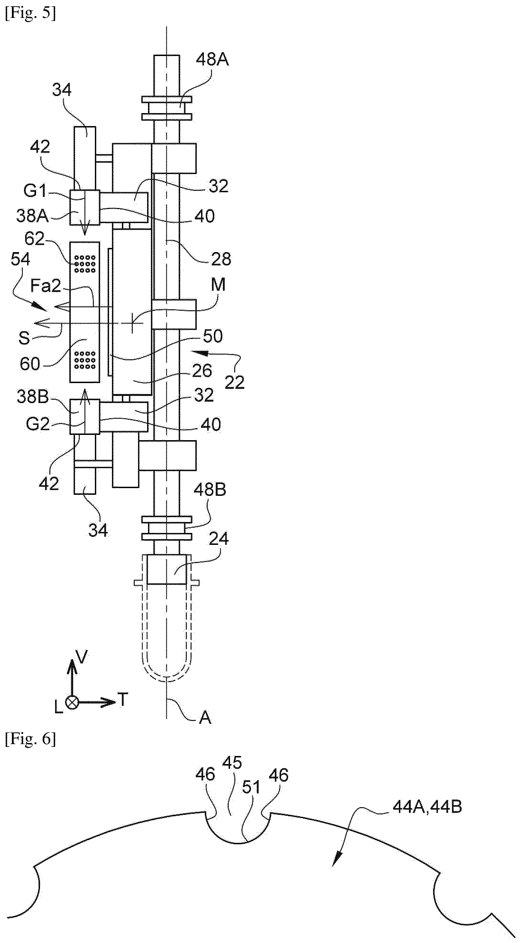

Les moyens de guidage comportent des organes de guidage de la navette 22 tout au long de son trajet 36 de convoyage. Plus particulièrement, la navette 22 est toujours en appui unilatéral sur au moins un organe de guidage selon une direction "S" d'appui tout au long de son trajet 36 de convoyage par l'intermédiaire d'organes d'appui embarqués. La direction "S" d'appui est orthogonale à la direction "L" longitudinale de déplacement. Le terme "unilatéral" signifie, que la navette 22 est en contact avec chaque organe de guidage uniquement dans la direction "S" d'appui, aucun obstacle ne s'opposant à l'écartement de la navette 22 par rapport à l'organe de guidage dans une direction opposée à la direction "S" d'appui. Comme représenté aux figures 3 et 5, la direction "S" d'appui est ici orthogonale à la direction verticale et elle est dirigée transversalement vers l'intérieur du circuit fermé formé par le trajet 36 de convoyage.

Comme représenté aux figures 4 et 5, des premiers moyens 30 de guidage comportent au moins un rail de guidage. Les premiers moyens 30 de guidage comportent ici deux rails 38A, 38B de guidage qui s'étendent parallèlement au trajet 36 de convoyage au moins sur chaque tronçon d'entraînement magnétique. Le trajet 36 de convoyage comporte ici deux tronçons d'entraînement magnétique qui correspondent aux deux tronçons 36B, 36D rectilignes du trajet 36 de convoyage.

Dans le mode de réalisation représenté aux figures, les rails 38A, 38B de guidage s'étendent plus particulièrement de manière continue sur toute la longueur du trajet 36 de convoyage. Les rails 38A, 38B de guidage sont agencés verticalement au droit l'un de l'autre. Ainsi, les premiers moyens 30 de guidage comportent un rail 38A de guidage supérieur et un rail 38B de guidage inférieur.

A cet effet, chaque rail 38A, 38B de guidage comporte une piste 40, formant un premier organe de guidage, qui est tournée dans une direction opposée à la direction "S" d'appui.

Les rails 38A, 38B de guidage présentent une structure suffisamment résistante pour permettre un guidage stable des navettes 22. Ils se différencient ainsi des différentes cames (non représentées) susceptibles d'équiper la station 14 de chauffage et qui ne sont destinées qu'à commander la position des organes 24 de préhension. Les cames de commandes ne présentent en effet pas les propriétés nécessaires et ne sont pas agencées de manière adaptée pour assurer le guidage de la navette 22 le long du trajet 36 de convoyage.

Plus particulièrement, les rails 38A, 38B de guidage sont destinés à coopérer avec des premiers organes 32 d'appui montés fixes sur le châssis 26 de la navette 22, ou autour d'un axe de rotation fixe par rapport au châssis 26 de la navette 22 dans le cas d'organes d'appui roulants. Au contraire, des cames coopèrent avec des suiveurs de came montés mobiles sur le châssis de la navette, par exemple en coulissement ou en pivotement autour d'un axe éloigné du suiveur de came.

Les premiers organes 32 d'appui embarqués sont destinés à être en contact permanent avec la piste 40 des rails 38A, 38B de guidage, au moins sur un tronçon d'entraînement magnétique comme cela sera expliqué plus en détails par la suite. Il s'agit ici de premiers organes 32 d'appui roulants formés par des galets.

En variante non représentée de l'invention, au moins l'un des organes d'appui coopérant avec la piste est formé par un patin glissant contre les rails de guidage.

La navette 22 est plus particulièrement en contact unilatéral permanent contre la piste 40 selon la direction "S" d'appui par l'intermédiaire d'au moins un premier organe 32 d'appui embarqué, au moins sur les tronçons d'entraînement magnétique.

La navette 22 embarque au moins deux premiers organes 32 d'appui dont chacun roule sur la piste 40 d'un rail 38A, 38B de guidage associé. Lesdits premiers organes 32 d'appui sont ici formés par des galets qui sont montés rotatifs autour d'un axe orthogonal à la direction "L" de déplacement et à la direction "S" d'appui. L'axe de rotation desdits galets est fixe par rapport au châssis 26 de la navette 22.

La navette 22 embarque ici quatre premiers organes 32 d'appui. Deux des premiers organes 32 d'appui roulent sur la piste 40 d'un des rails 38A de guidage et les deux autres premiers organes 32 d'appui roulent sur la piste 40 de l'autre des rails 38B de guidage.

Pour des raisons de stabilité, le centre de masse "M" de la navette 22 est avantageusement agencé à l'intérieur d'un polygone de sustentation formé par les points d'appui de chaque premier organe 32 d'appui avec les rails 38A, 38B de guidage.

Les deux pistes 40 sont ici agencées dans un même plan vertical. Elles sont ici tournées transversalement vers l'extérieur du circuit fermé formé par le trajet 36 de convoyage.

Un tel guidage unilatéral dans la direction "S" d'appui permet très avantageusement de réduire le nombre de composant du dispositif 20 de convoyage. En outre, cela permet aussi de simplifier l'ajout ou le retrait de navettes 22 sur le dispositif 20 de convoyage, par exemple pour des besoins de maintenance ou d'adaptation du dispositif 20 de convoyage à différents formats de préformes 12.

Cette configuration dans laquelle les navettes 22 sont en appui unilatéral sur la piste 30 selon la direction "S" d'appui est particulièrement avantageuse pour le remplacement de navettes 22 comme cela sera expliqué par la suite.

Par ailleurs, la navette 22 est aussi guidée par contact permanent d'au moins un premier organe 34 de maintien embarqué avec au moins l'un des rails 38A, 38B de guidage selon une direction "G1"de support orthogonale aux directions "S" et "L" d'appui et de déplacement.

A cet effet, au moins l'un des rails 38A, 38B de guidage comporte un chemin 42 de support. Le chemin 42 de support est tourné vers une direction opposée à la direction "G1" de support. Chaque premier organe 34 de maintien est ici formé par un galet qui est montés rotatif sur le châssis 26 autour d'un axe fixe orthogonal à la direction "L" de déplacement et à la direction "G1" de support.

Dans le mode de réalisation représenté aux figures, la direction "G1" de support est dirigée globalement verticalement. La direction verticale "V" est ici dirigée de bas en haut dans un sens opposé à celui de la gravité terrestre. Le premier organe 34 de maintien permet ainsi de maintenir la navette 22 sur les rails 38A, 38B de guidage à l'encontre de la gravité. Le chemin 42 de support est donc tourné vers le haut.

Dans le mode de réalisation représenté aux figures, la navette 22 est ici guidée par contact bilatéral permanent d'au moins un premier organe 34 de maintien embarqué avec les rails 38A, 38B de guidage selon la direction de support "G1" et selon une direction de support "G2" opposée.

Ainsi, la navette 22 embarque ici deux premiers organes 34 de maintien dont chacun roule sur un chemin 42 de support associé.

Le terme "bilatéral" signifie que la navette 22 est bloquée en déplacement par rapport aux rails 38A, 38B de guidage dans les deux directions "G1", "G2" de support opposées.

Les chemins 42 de support sont ici orthogonaux aux pistes 40. Ils sont tournés à l'opposé l'un de l'autre.

En variante non représentée de l'invention, les deux chemins de support sont tournés en vis-à-vis l'un de l'autre.

Pour permettre à chaque premier organe 34 de maintien de rester en permanence en contact avec son chemin 42 de support associé, au moins sur le tronçon d'entraînement magnétique, tout en autorisant un jeu vertical de fonctionnement, au moins l'un des premiers organes 34 de maintien, par exemple le premier organe 34 de maintien situé vers le bas, est monté mobile verticalement avec un débattement limité par rapport au châssis 26, ledit premier organe 34 de maintien étant contraint vers le chemin 42 de support associé, par exemple au moyen d'un organe élastique (non représenté).

En variante, seul le premier organe 34 de maintien qui s'oppose à la force de la gravité est en contact permanent avec son rail de guidage associé, un jeu de fonctionnement vertical étant réservé entre l'autre premier organe 34 de maintien son rail de guidage associé.

En variante non représentée de l'invention, un organe de maintien et un organe d'appui sont portés par un même galet qui présente une gorge périphérique à section à deux pans en forme de "V". Le galet est monté à rotation sur le châssis autour d'un axe incliné par rapport aux directions d'appui et de support, par exemple avec un angle de 45°. Chaque pan de la gorge est conçu pour rouler sur la piste 40 d'une part, formant ainsi un organe d'appui, et sur le chemin de support d'autre part, formant ainsi un organe de support. Ainsi, un même galet permet de guider les déplacements de la navette à la fois selon la direction d'appui et selon l'une des directions de support.

Comme cela est représenté plus en détails aux figures 2 et 3, le dispositif 20 de convoyage comporte aussi au moins un mécanisme 44 d'entraînement par contact de chaque navette 22 le long d'au moins un tronçon d'entraînement par contact du trajet 36 de convoyage. Dans le mode de réalisation représenté aux figures 1 à 3, le dispositif 20 de convoyage comporte deux tronçons d'entraînement par contact qui correspondent aux tronçons 36A, 36C de virage du trajet 36 de convoyage.

Le mécanisme 44 d'entraînement par contact comporte au moins un organe 46 de poussée mobile qui produit une force "Fm1" motrice en poussant par contact la navette 22 le long du tronçon d'entraînement par contact du trajet 36 de convoyage.

S'agissant ici de tronçons 36A, 36C de virage en forme d'arc de cercle, le mécanisme 44 d'entraînement par contact de chaque tronçon 36A, 36C de virage comporte au moins une roue 44A, 44B motorisée dont l'axe de rotation vertical est positionné au centre de giration du tronçon 36A, 36C de virage associé. Les organes 46 de poussée sont montés solidaires en rotation en périphérie de la roue 44A, 44B motorisée.

Pour permettre de fournir une poussée ne provoquant pas de couple de basculement sur la navette 22, le mécanisme 44 d'entraînement par contact de chaque tronçon 36A, 36C de virage est formé par deux roues 44A, 44B motorisée coaxiales qui tournent conjointement. Les deux roues 44A, 44B sont par exemple entraînées en rotation par un même moteur (non représenté). Les deux roues 44A, 44B motorisées sont agencés l'une au-dessus de l'autre. Comme représenté à la [Fig.3], elles sont situées verticalement de part et d'autre du châssis 26 de la navette 22 pour produire une poussée équilibrée sur chaque navette 22.

Les organes 46 de poussée sont agencés à la périphérie de chaque roue 44A, 44B motorisée de manière que chaque organe 46 de poussée d'une roue 44A motorisée coïncide avec un organe 46 de poussée de l'autre roue 44B motorisée pour que les organes 46 de poussée des deux roues 44A, 44B motorisées viennent en prise simultanément avec une navette 22. Comme représenté à la [Fig.6], les organes 46 de poussée sont ici formés par des bords sensiblement radiaux des fourchettes 45 qui coopèrent par engrènement avec au moins un organe 48 de saisie complémentaire de chaque navette 22. A titre d'exemple non limitatif, les fourchettes 45 sont ici réalisées sous la forme d'encoches réalisées dans le bord périphérique de chaque roue 44A, 44B motorisée.

En variante non représentée de l'invention, chaque organe 46 de poussée est formé par des faces qui rayonnent radialement par rapport à l'axe de rotation de la roue et qui viennent au contact d'une face en vis-à-vis de la navette pour pousser cette dernière.

Chaque navette 22 comporte ici deux organes 48 de saisie pour coopérer avec chacune des roues 44A, 44B motorisées. Les organes 48 de saisie sont ici fixés sur un tronçon de l'arbre 28. Il s'agit ici de bagues 48A, 48B présentant une gorge annulaire sur une face externe qui engrène avec l'organe 46 de poussée associé. Les bagues 48A, 48B sont ainsi coaxiales selon un axe vertical.

Ainsi, c'est la rotation des roues 44A, 44B motorisées qui permet de faire avancer les navettes 22 le long du trajet 36 de convoyage. Les navettes 22 sont alors écartées les unes des autres dans le sens de déplacement d'un pas correspondant au pas entre deux organes 46 de poussée adjacent de chaque roue 44A, 44B motorisée.

Les navettes 22 étant indépendantes les unes des autres, le pas entre deux navettes 22 peut être différent sur chaque tronçon d'entraînement par contact. Par exemple, les navettes 22 sont plus rapprochées les unes des autres sur le premier tronçon 36A de virage que sur le deuxième tronçon 36C de virage.

Le dispositif de convoyage comporte ici des deuxièmes moyens de guidage qui comporte les organes 46 de poussée et les organes 48 de saisie.

Les organes 46 de poussée permettent ainsi de guider la navette 22 au moins dans la direction "G1" de support par contact avec les organes 48 de saisie. Dans l'exemple représenté aux figures 2 et 3, les organes 46 de poussée permettent de guider la navette 22 au moins dans les deux directions "G1", "G2" de support opposées par contact avec les organes 48 de saisie.

Plus précisément, au moins la bague 48A supérieure comporte deux rebords, formant des deuxièmes organes 47 de maintien, qui délimitent verticalement une gorge dans laquelle chaque fourchette 45 est reçue. Ainsi, les déplacements de la navette 22 sont limités verticalement dans les deux sens par contact entre chaque rebord de la bague 48A supérieure et une face 53 supérieure, respectivement une face 55 inférieure, de la fourchette 45. La face 53 supérieure et la face 55 inférieure de chaque fourchette 45 forment ainsi des organes de support. Ainsi, chaque navette 22 peut notamment reposer sur la face 53 supérieure des fourchettes 45 à l'encontre de la gravité. Les deuxièmes organes 47 de maintien prennent ainsi le relais des premiers organes 34 de maintien pour retenir la navette 22 sur le trajet 36 de convoyage à l'encontre de la gravité.

Ceci permet notamment de décoller les premiers organes 34 de maintien par rapport aux rails de guidage sur les tronçons d'entraînement par contact. Ceci est très avantageux, comme ici, lorsque le tronçon d'entraînement par contact forme un virage dans lequel un roulement des galets sur un plan horizontal se ferait obligatoirement avec glissement, ce qui provoquait ainsi une usure prématurée des premiers organes 34 de maintien. En décollant les premiers organes 34 de maintien des rails 38A, 38B de guidage et en assurant le guidage au moyen des deuxièmes organes 47 de support portés par les organes 46 de poussée sur les tronçons d'entraînement par contact, la durée de vie des premiers organes 34 de maintien est ainsi sensiblement augmentée. Pour ce faire les rails 38A, 38B sont par exemple rapprochés verticalement l'un de l'autre pour s'écarter des premiers organes 34 de maintien.

En variante non représentée de l'invention, le maintien des navettes le long des tronçons d'entraînement par contact demeure réalisé par contact entre les premiers organes de maintien et les chemins de support des rails.

En outre, sur le tronçon d'entraînement par contact, le guidage par appui unilatéral selon la direction "S" d'appui peut être effectué selon deux modes de réalisation.

Selon un premier mode de réalisation de l'invention représenté aux figures 2 et 3, la navette 22 est guidée le long du trajet 36 de convoyage par contact unilatéral de la gorge des organes 48 de saisie, formant un deuxième organe 49 d'appui, contre un fond de la fourchette 45, formant un deuxième organe 51 de guidage, selon la direction "S" d'appui. Ainsi, les bagues 48A, 48B sont en appui unilatéral selon la direction "S" d'appui contre le fond des fourchettes 45. La position du fond des fourchettes 45 est conçue de manière que les premiers organes 32 de guidage soient légèrement décollés de la piste 30.

Les bagues 48A, 48B étant coaxiales verticalement, la navette 22 est ici susceptible de pivoter autour de l'axe "A" par rapport aux organes 46 de poussée. Le débattement en pivotement autour de l'axe "A" est limité dans les deux sens par contact entre les premiers organes 32 de guidage et la piste 30.

Selon un deuxième mode de réalisation de l'invention (non représenté), la navette 22 est guidée le long du trajet 36 de convoyage par contact unilatéral des premiers organes 32 d'appui contre la piste 30 selon la direction "S" d'appui de la même manière que sur le tronçon d'entraînement magnétique (voir [Fig.5]). Pour ce faire, le fond des fourchettes 45 est agencé de manière à être écarté de la bague selon la direction "S" d'appui pour permettre aux navettes 22 de reposer sur les rails 38A, 38B de guidage uniquement par les premiers organes 32 d'appui.

En variante non représentée de l'invention, le tronçon d'entraînement par contact est formé par un tronçon rectiligne. Le mécanisme d'entraînement par contact comporte alors une chaîne équipée d'organes de poussée. La chaîne est agencée autour de roues de guidage, dont l'une au moins est motorisée, de manière qu'un tronçon de la chaîne s'étende le long dudit tronçon rectiligne du trajet de convoyage.

Selon une autre variante non représentée de l'invention, la totalité les navettes sont entraînées par contact sur la totalité du trajet 36 de convoyage.

Quel que soit le mode de réalisation mis en œuvre, les navettes 22 sont ici guidées unilatéralement dans la direction "S" d'appui sur toute la longueur du trajet 36 de convoyage.

Une telle conception est beaucoup plus avantageuse qu'un dispositif dans lequel les navettes sont guidées par contact bilatéral selon la direction "S" d'appui. Un tel guidage bilatéral nécessiterait un contrerail qui s'étendrait sur au moins une partie de la longueur du trajet 36 de convoyage pour retenir les navettes 22 susceptibles de s'écarter de la piste 40 selon une direction opposée à la direction "S" d'appui. Cependant, la navette 22 serait inévitablement montée avec un jeu de fonctionnement entre un tel rail de sécurité et la piste 40. La navette 22 serait donc susceptible de bouger selon la direction "S" d'appui, ce qui rendrait le transport instable. Cela obligerait donc à prévoir des organes supplémentaires mobiles élastiquement ce qui augmenterait le coût de fabrication du dispositif 20 de convoyage.

En outre, le guidage unilatéral dans la direction "S" d'appui permet de pouvoir ajouter ou retirer très aisément des navettes 22. Il est donc préférable de préserver au moins un tronçon du trajet 36 de convoyage exempt de contrerail.

Il est néanmoins possible de prévoir un rail de sécurité qui s'étende à distance de la navette 22 sur une partie du trajet 36 de convoyage uniquement pour éviter que la navette 22 ne tombe des rails 38A, 38B de guidage en cas de décollement de la piste 40.

Dans tous ces cas, il est nécessaire de prévoir un moyen peu onéreux et permettant de préserver les avantages du guidage unilatéral pour maintenir la navette 22 en appui contre les organes de guidage selon la direction "S" d'appui.

A cet effet, l'invention propose d'embarquer au moins un aimant 50 sur chaque navette 22. Il s'agit ici d'un aimant 50 permanent, comme cela est notamment illustré aux figures 2 et 3.

L'aimant 50 peut être réalisé en une seule pièce ou par assemblage de plusieurs aimants élémentaires.

En variante non représentée de l'invention, il s'agit d'un électroaimant.

Au moins une bande 52 de matériau ferromagnétique est fixée le long du tronçon d'entraînement par contact pour produire, par interaction magnétique avec l'aimant 50 porté par chaque navette 22, une force "Fa1" d'attraction suffisante pour maintenir la navette 22 en appui, par l'intermédiaire de ses organes 32 ou 49 d'appui contre les organes 40 ou 51 de guidage selon la direction "S" d'appui. La force "Fa1" d'attraction permet ainsi de retenir les organes 48 de saisie en prise avec les organes 46 de poussée tout au long du tronçon d'entraînement par contact correspondant.

La bande 52 de matériau magnétique est réalisée en un matériau ferromagnétique qui peut être aimanté, aussi appelé matériau ferromagnétique dur, ou non aimanté, aussi appelé matériau ferromagnétique doux.

La bande 52 de matériau ferromagnétique s'étend ici de manière continue tout au long du tronçon d'entraînement par contact. La bande 52 de matériau ferromagnétique est fixe par rapport aux rails 38A, 38B de guidage.

La bande 52 de matériau ferromagnétique peut être réalisée en une pièce ou en plusieurs pièces qui sont fixées les unes aux autres de manière à former une bande 52 de matériau ferromagnétique permettant de maintenir une force "Fa1" d'attraction sensiblement constante et continue tout au long de la bande. Il est notamment possible de réserver un jeu longitudinal (non représenté), par exemple pour le montage ou pour la dilatation, entre deux pièces formant la bande ferromagnétique tant que ce jeu est suffisamment étroit pour maintenir sensiblement constante l'intensité de la force "Fa1" d'attraction magnétique lors du passage de la navette 22 au droit de ce jeu.

L'aimant 50 est ici agencé sur le châssis 26 de la navette 22 en vis-à-vis de la bande 52 de matériau ferromagnétique selon la direction "S" d'appui. Plus particulièrement, l'un des pôles "P1, P2" de l'aimant 50 est tourné vers la bande 52 de matériau ferromagnétique selon la direction "S" d'appui. Ainsi, l'axe magnétique de l'aimant 50 est aligné avec la direction "S" d'appui. Dans l'exemple représenté aux figures, l'un des pôles "P1" de l'aimant 50 est agencé transversalement en vis-à-vis de la bande 52 de matériau ferromagnétique.

La bande 52 de matériau ferromagnétique est agencée de manière qu'un espace soit réservé en permanence entre l'aimant 50 et la bande 52 de matériau ferromagnétique selon la direction "S" d'appui, ici la direction transversale. L'aimant 50 présente ici une face verticale plane agencée en vis-à-vis de la bande 52 de matériau ferromagnétique, tandis que la bande 52 de matériau ferromagnétique présente ici une courbure concave dans un plan horizontal. De ce fait, on appellera par la suite "entrefer" "e1" la distance la plus courte selon la direction "S" d'appui entre l'aimant et la bande 52 de matériau ferromagnétique.

Cet entrefer "e1" présente une valeur suffisamment faible pour que la force "Fa1" d'attraction soit en permanence suffisante pour appuyer fermement les organes 32, 49 d'appui contre les organes 40, 51 de guidage. L'entrefer "e1" est par exemple inférieur ou égal à 2 mm. L'aimant 50, l'épaisseur de la bande 52 de matériau ferromagnétique et l'entrefer"e1" sont sélectionné de manière que la force "Fa1" d'attraction soit par exemple supérieure ou égale à 230 N tout au long du tronçon d'entraînement par contact correspondant. L'épaisseur de la bande 52 de matériau ferromagnétique est par exemple supérieure ou égale à 5 mm.

Pour permettre de maintenir la navette 22 de manière stable contre les organes 40, 51 de guidage, la bande 52 de matériau ferromagnétique est agencée verticalement entre les deux organes 40, 51 d'appui. Ici, les deux roues 44A, 44B motorisées s'étendent de part et d'autre de la bande 52 en matériau ferromagnétique selon la direction verticale "V".

Cet agencement permet de garantir que les organes 49 d'appui de la navette 22 demeure en contact permanent avec les organes 51 de guidage au moins sur la totalité du tronçon d'entraînement par contact. Cela permet notamment d'éviter à la navette 22 de venir au contact du rail de sécurité, lorsque le dispositif 20 de convoyage en est équipé, voire de s'affranchir totalement d'un tel rail de sécurité, comme c'est le cas dans les exemples représentés aux figures.

En outre, il est possible d'extraire facilement une navette 22, par exemple en écartant temporairement un tronçon de la bande 52 de matériau ferromagnétique pour pouvoir procéder facilement au remplacement d'une navette 22.

Selon un autre aspect de l'invention représenté aux figures 4 et 5, les navettes 22 sont entraînées le long des tronçons d'entraînement magnétique, non plus par le mécanisme 44 d'entraînement par contact, mais par au moins un moteur 54 linéaire.

L'usage d'un tel moteur 54 linéaire présente notamment l'avantage de pouvoir commander individuellement les déplacements de chacune des navettes 22 le long du tronçon d'entraînement magnétique du trajet 36 de convoyage. Cela est notamment très avantageux pour moduler précisément la durée et l'orientation des préformes 12 dans le tunnel 18 de chauffage.

Un tel moteur 54 linéaire est néanmoins très onéreux à réaliser. Il est donc très avantageux de réaliser un dispositif 20 de convoyage à motorisation hybride dans lequel les avantages du moteur 54 linéaire sont utilisés, par exemple pour le déplacement des préformes 12 dans le tunnel 18 de chauffage, tandis que pour les tronçons du trajet 36 de convoyage dans lesquelles ces avantages ne sont pas requis, le mécanisme 44 d'entraînement par contact prend le relais du moteur 54 linéaire pour déplacer les navettes 22 le long du trajet 36 de convoyage.

Au contraire, comme cela sera expliqué par la suite en référence à la [Fig.1], une zone "Z1" d'entrée et une zone Z2" de sortie des préformes 12 de la station 14 de chauffage nécessitent que les préformes 12 soient transmises entre une roue 56 d'entrée et le dispositif 20 de convoyage avec un pas déterminé, ou encore que les préformes 12 soient transmises entre le dispositif 20 de convoyage et une roue 58 de sortie avec un pas déterminé. Ainsi, dans ces deux zones "Z1, Z2", l'usage d'un mécanisme 44 d'entraînement par contact est particulièrement adapté.

En outre, un moteur 54 linéaire est beaucoup plus onéreux à réaliser pour des tronçons de trajet courbes que pour des tronçons de trajet rectilignes. Le dispositif 20 de convoyage représenté à la [Fig.1] présente ainsi deux tronçons d'entraînement magnétique rectilignes qui correspondent aux tronçons 36B, 36D rectilignes du trajet 36 de convoyage, tandis que les tronçons 36A, 36C de virage du trajet 36 de convoyage correspondent à des tronçons d'entraînement par contact.

Le moteur 54 linéaire comporte une voie 60 magnétique qui est agencée le long dudit tronçon d'entraînement magnétique. La voie 60 magnétique forme un stator comportant une série de bobinages 62, dont un est représenté à la [Fig.5], qui sont répartis le long de la voie 60 magnétique. Chaque bobinage 62 est commandé individuellement pour induire localement un champ magnétique de manière indépendante des autres bobinages 62.

Les bobinages 62 sont par exemple commandés par une unité électronique de commande (non représentée) qui est programmée de manière appropriée.

Chaque navette 22 est équipée d'au moins un aimant 50 permanent. Il s'agit très avantageusement du même aimant 50 qui est utilisé pour maintenir la navette 22 contre les organes 51 de guidage sur le tronçon d'entraînement par contact.

Le champ magnétique induit par chaque bobinage 62 de la voie 60 magnétique interagit avec l'aimant 50 embarqué par la navette 22 pour produire, sans contact, une force "Fm2" motrice, orientée longitudinalement, de déplacement de la navette 22 le long du trajet 36 de convoyage.

Le champ magnétique émis par la voie 60 magnétique interagit aussi avec l'aimant 50 pour produire une force "Fa2" d'attraction de la navette 22 contre la piste 40 selon la direction "S" d'appui, de manière équivalente à la force "Fa1" d'attraction produite par l'interaction entre la bande 52 de matériau ferromagnétique et l'aimant 50 le long du tronçon d'entraînement par contact.

Le pas entre deux bobinages 62 est suffisamment faible pour permettre de commander les bobinages 62 de la voie 60 magnétique de manière à provoquer le déplacement de chaque navette 22 de manière indépendante des autres navettes 22.

De manière générale, cette technologie mise en œuvre dans le cadre de l'invention permet de déplacer toutes les navettes 22 en file dans le même sens de déplacement le long du tronçon d'entraînement magnétique du trajet 36 de convoyage, ici un sens antihoraire. La vitesse de déplacement de chaque navette 22 est susceptible d'être commandée individuellement par une unité électronique de commande (non représentée).

La voie 60 magnétique est agencée de manière qu'un espace soit réservé en permanence entre l'aimant 50 et la voie 60 magnétique selon la direction "S" d'appui, ici la direction transversale. La largeur de cet espace selon la direction "S" d'appui sera par la suite appelé "entrefer e2".

Cet entrefer "e2" (reporter [Fig.5]) présente une valeur suffisamment faible pour que la force "Fa2" d'attraction soit en permanence suffisante pour appuyer fermement les organes 32 de d'appui contre les pistes 40 des rails 38A, 38B de guidage et pour que la force "Fm2" motrice soit suffisante pour déplacer la navette 22 le long du trajet 36 de convoyage. L'entrefer "e2" est par exemple inférieur ou égal à 1,5 mm. La force "Fa2" d'attraction est par exemple supérieure ou égale à 230 N.

Pour permettre de maintenir la navette 22 de manière stable contre la piste 40, la voie 60 magnétique est agencée entre les deux rails 38A, 38B de guidage selon les directions "G1", "G2" de support. Ainsi, les deux rails 38A, 38B de guidage parallèles s'étendent ici de part et d'autre de la voie 60 magnétique selon la direction verticale.

Cet agencement permet de garantir que la navette 22 demeure en contact permanent avec les pistes 40. Cela permet notamment d'éviter à la navette 22 de venir au contact du rail de sécurité, lorsque le dispositif 20 de convoyage en est équipé, voire de s'affranchir totalement d'un tel rail de sécurité, comme c'est le cas dans les exemples représentés aux figures.

En outre, il est possible d'extraire facilement une navette 22, par exemple en interrompant temporairement l'émission d'un champ magnétique en un point particulier de la voie 60 magnétique pour pouvoir procéder facilement au remplacement d'une navette 22.

Du fait de cette configuration, la voie 60 magnétique est avantageusement agencée dans le prolongement de la bande 52 de matériau ferromagnétique. Ainsi, le même aimant 50 est utilisé pour produire la force "Fa1" d'attraction sur les tronçons d'entraînement par contact et pour produire la force "Fa2" d'attraction sur les tronçons d'entraînement magnétique.

Comme illustré à la [Fig.1], le dispositif 20 de convoyage comporte quatre zones 64A, 64B, 64C, 64D de transition entre un tronçon d'entraînement par contact et un tronçon d'entraînement magnétique. Dans ces zones 64A, 64B, 64C, 64D de transitions assez courtes, la navette 22 est engagée avec les organes 46 de poussée pour produire la force "Fm1" motrice tandis qu'elle est encore en vis-à-vis de la voie 60 magnétique qui fournit la force "Fa2" d'attraction à la navette 22. Ainsi, chaque navette 22 est attirée dans la direction "S" d'appui par la voie 60 magnétique. Ces zones 64A, 64B, 64C, 64D de transition sont très courtes par rapport à la longueur de chaque tronçon du trajet 36 de convoyage.

On décrit maintenant un cycle d'une navette 22 le long du trajet 36 de convoyage. Lors du fonctionnement de la station 14 de chauffage, les préformes 12 sont acheminés jusqu'à la zone "Z1" d'entrée du dispositif 20 de convoyage qui est agencée dans le premier tronçon 36A de virage. Les préformes 12 sont ici acheminées au moyen de la roue 56 d'entrée qui amène les préformes 12 en file avec un pas d'écartement déterminé.

Dans le premier tronçon 36A de virage, les navettes 22 sont entraînées par le mécanisme 44 d'entraînement par contact en étant écartées d'un pas adapté pour charger les préformes 12 sur les organes 24 de préhension. Ce pas est fixé par l'écartement circonférentiel entre deux organes 46 de poussée successifs. Puis, les préformes 12 ainsi chargées sont acheminée par les navettes 22 le long du premier tronçon 36B rectiligne grâce au moteur 54 linéaire.

Puis les préformes 12 atteignent le deuxième tronçon 36C de virage. Les roues 44A, 44B motorisées du mécanisme 44 d'entraînement par contact du deuxième tronçon 36C de virage peut tourner à une vitesse différente de celle des roues 44A, 44B motorisées du premier tronçon 36A de virage, par exemple plus vite.

Les navettes 22 sont ensuite à nouveau entraînées par un moteur 54 linéaire le long du deuxième tronçon 36D rectiligne, de manière que les préformes 12 passent à travers le tunnel 18 de chauffage. La vitesse des navettes 22 est adaptée pour que la quantité de préforme 12 contenue dans le tunnel 18 de chauffage soit sensiblement maximale. En outre, la vitesse est adaptée pour que le chauffage du corps 12A des préformes 12 soit optimal.

Les navettes 22 reviennent ensuite dans le premier tronçon 36A de virage au début duquel se situe la zone "Z2" de sortie. Les navettes 22 sont séparées du même pas qu'en début de cycle. Les préformes 12 sont ainsi écartées d'un pas adapté pour permettre leur transfert à la roue 58 de sortie qui les saisit pour pouvoir acheminer en file les préformes 12 ainsi chauffées vers la station 16 de formage.

Puis les navettes 22, ainsi déchargées de leurs préformes 12, sont acheminées par le mécanisme 40 d'entraînement par contact jusqu'à la zone "Z1" d'entrée pour effectuer un nouveau cycle.

Le dispositif 20 de convoyage est particulièrement adapté pour le transport des préformes 12 dans la station 14 de chauffage mais un tel dispositif 20 de convoyage pourrait aussi équiper d'autres stations de l'installation 10 de fabrication, pour transporter des préformes 12 ou des récipients.

## Revendications

1. Dispositif (20) de convoyage de corps creux (12), pour une installation (10) de fabrication de récipients, le dispositif (20) de convoyage comportant :
- au moins une navette (22) qui embarque au moins un organe (24) de préhension d'un corps creux (12) ;
- au moins un organe (40, 51) de guidage pour guider les déplacements de la navette (22) dans une direction (L) de déplacement le long d'un trajet (36) de convoyage par contact, selon une direction (S) d'appui, avec au moins un organe (32, 49) d'appui embarqués par la navette (22) ;
- au moins un mécanisme (44) d'entraînement par contact de chaque navette (22) le long d'au moins un tronçon d'entraînement par contact du trajet (36) de convoyage, le mécanisme (44) d'entraînement comportant au moins un organe (46) de poussée mobile qui pousse par contact la navette (22) dans la direction (L) de déplacement le long du trajet (36) de convoyage ;
**caractérisé en ce qu'**il comporte au moins une bande (52) de matériau ferromagnétique qui est agencée le long du tronçon d'entraînement par contact pour produire, par interaction magnétique avec au moins un aimant (50) embarqué par chaque navette (22), une force (Fa1) d'attraction suffisante pour maintenir la navette (22) en appui permanent contre les organes (40, 51) de guidage selon la direction (S) d'appui orthogonale à la direction (L) de déplacement.

2. Dispositif (20) de convoyage selon la revendication précédente, **caractérisé en ce que** la navette (22) est en contact unilatéral permanent contre au moins un organe (40, 51) de guidage selon la direction (S) d'appui par l'intermédiaire d'au moins un organe (32) d'appui embarqué.

3. Dispositif (20) de convoyage selon l'une quelconque des revendications précédentes, **caractérisé en ce qu'**au moins un organe de guidage est formé par une piste (40) d'au moins un rail (38A, 38B) de guidage.

4. Dispositif (20) de convoyage selon l'une quelconque des revendications précédentes, **caractérisé en ce que** le long du tronçon d'entraînement par contact, au moins un organe (51) de guidage est porté par un organe (46) de poussée.

5. Dispositif (20) de convoyage selon l'une quelconque des revendications précédentes, **caractérisé en ce qu'**il comporte au moins un moteur (54) linéaire pour déplacer les navettes (22) le long d'au moins un tronçon d'entraînement magnétique du trajet (36) de convoyage, le moteur (54) linéaire comportant une voie (60) magnétique agencée le long dudit tronçon et ledit au moins un aimant (50) embarqué par chaque navette (22), la voie (60) magnétique étant susceptible d'émettre un champ magnétique commandé qui interagit avec l'aimant (50) pour produire une force (Fm2) motrice de déplacement de la navette (22) le long du trajet de convoyage et pour produire une force (Fa2) d'attraction de la navette (22) contre les rails (38A, 38B) de guidage selon la direction (S) d'appui.

6. Dispositif (20) de convoyage selon l'une quelconque des revendications précédentes, **caractérisé en ce que** la navette (22) est guidée par contact permanent d'au moins un organe (34) de maintien embarqué avec un organe (30, 46) de support selon au moins une direction (G1, G2) de support orthogonale aux directions (S, L) d'appui et de déplacement.

7. Dispositif (20) de convoyage selon l'une quelconque des revendications 3 à 6, **caractérisé en ce qu'**il comporte deux rails (38A, 38B) de guidage parallèles qui s'étendent de part et d'autre de la voie (60) magnétique et de la bande (52) en matériau ferromagnétique selon les directions (G1, G2) de support.

8. Dispositif (20) de convoyage selon l'une quelconque des revendications précédentes, **caractérisé en ce qu'**au moins un organe (32) d'appui est formé par un galet de roulement.

9. Dispositif (20) de convoyage selon la revendication précédente prise en combinaison avec la revendication 6, **caractérisé en ce que** la navette (22) embarque au moins deux galets de roulement, formant des organes (32) d'appui, dont chacun roule sur une piste (40) d'un rail (38A, 38B) de guidage associé qui est tourné dans une direction opposée à la direction (S) d'appui.

10. Dispositif (20) de convoyage selon l'une quelconque des revendications 8 ou 9 prise en combinaison avec la revendication 7, **caractérisé en ce que** la navette (22) embarque au moins deux galets de roulement, formant des organes (34) de maintien, dont chacun roule sur un chemin (42) de support d'un rail (38A, 38B) de guidage associé.

11. Dispositif (20) de convoyage selon l'une quelconque des revendications 6 à 10, **caractérisé en ce que** l'au moins une direction (G1, G2) de support est dirigée globalement parallèlement au sens de la gravité terrestre.

12. Dispositif (20) de convoyage selon l'une quelconque des revendications précédentes, **caractérisé en ce que** le tronçon d'entraînement par contact du trajet (36) de convoyage présente une forme d'arc de cercle, le mécanisme (40) d'entraînement par contact étant formé par au moins une roue (40A, 40B) motorisée centrée sur le centre de giration du tronçon d'entraînement par contact, les organes (46) de poussée étant montés solidaires en rotation avec la roue (40A, 40B) motorisée.

13. Dispositif (20) de convoyage selon la revendication précédente, **caractérisé en ce que** chaque organe (46) de poussée est formé par des bords d'au moins une fourchette (45) qui coopère par engrènement avec au moins un organe (48) de saisie complémentaire de chaque navette (22).

14. Dispositif (20) selon la revendication précédente prise en combinaison avec la revendication 4, **caractérisé en ce qu'**un fond de la fourchette (45) forme un organe (51) de guidage qui coopère avec un organe (49) d'appui embarqué par la navette (22).

## Patentansprüche

1. Vorrichtung (20) zum Transport von Hohlkörpern (12) für eine Anlage (10) zur Herstellung von Behältern, wobei die Transportvorrichtung (20) aufweist:
- mindestens ein Schiffchen (22), das mindestens ein Organ (24) zum Greifen eines Hohlkörpers (12) mitführt;
- mindestens ein Führungsorgan (40, 51) zum Führen der Bewegungen des Schiffchens (22) in einer Bewegungsrichtung (L) entlang eines Transportweges (36) durch Kontakt, in einer Anlagerichtung (S), mit mindestens einem Anlageorgan (32, 49), das von dem Schiffchen (22) mitgeführt wird;
- mindestens einen Mechanismus (44) zum Kontaktantrieb jedes Schiffchens (22) entlang mindestens eines Kontaktantriebsabschnitts des Transportweges (36), wobei der Antriebsmechanismus (44) mindestens ein bewegliches Schuborgan (46) aufweist, welches das Schiffchen (22) durch Kontakt in der Bewegungsrichtung (L) entlang des Transportweges (36) schiebt;
**dadurch gekennzeichnet, dass** sie mindestens einen Streifen (52) aus ferromagnetischem Material aufweist, der entlang des Kontaktantriebsabschnitts angeordnet ist, um durch magnetische Interaktion mit mindestens einem von jedem Schiffchen (22) mitgeführten Magneten (50) eine Anzugskraft (Fa1) zu erzeugen, die ausreichend ist, um das Schiffchen (22) in der zur Bewegungsrichtung (L) orthogonalen Anlagerichtung (S) in permanenter Anlage an den Führungsorganen (40, 51) zu halten.

2. Transportvorrichtung (20) nach dem vorhergehenden Anspruch, **dadurch gekennzeichnet, dass** sich das Schiffchen (22) in der Anlagerichtung (S) durch mindestens ein mitgeführtes Anlageorgan (32) in permanentem einseitigem Kontakt mit mindestens einem Führungsorgan (40, 51) befindet.

3. Transportvorrichtung (20) nach einem der vorhergehenden Ansprüche, **dadurch gekennzeichnet, dass** mindestens ein Führungsorgan von einer Laufbahn (40) mindestens einer Führungsschiene (38A, 38B) gebildet wird.

4. Transportvorrichtung (20) nach einem der vorhergehenden Ansprüche, **dadurch gekennzeichnet, dass** entlang des Kontaktantriebsabschnitts mindestens ein Führungsorgan (51) von einem Schuborgan (46) getragen wird.

5. Transportvorrichtung (20) nach einem der vorhergehenden Ansprüche, **dadurch gekennzeichnet, dass** sie mindestens einen Linearmotor (54) zum Bewegen der Schiffchen (22) entlang mindestens eines Magnetantriebsabschnitts des Transportweges (36) aufweist, wobei der Linearmotor (54) einen magnetischen Pfad (60) aufweist, der entlang dieses Abschnitts und des von jedem Schiffchen (22) mitgeführten mindestens einen Magneten (50) angeordnet ist, wobei der magnetische Pfad (60) ein gesteuertes Magnetfeld aussenden kann, das mit dem Magneten (50) interagiert, um eine Triebkraft (Fm2) der Bewegung des Schiffchens (22) entlang des Transportweges zu erzeugen und um ein Kraft (Fa2) zum Anziehen des Schiffchens (22) an die Führungsschienen (38A, 38B) in der Anlagerichtung (S) zu erzeugen.

6. Transportvorrichtung (20) nach einem der vorhergehenden Ansprüche, **dadurch gekennzeichnet, dass** das Schiffchen (22) durch permanenten Kontakt mindestens eines mitgeführten Halteorgans (34) mit einem Stützorgan (30, 46) in mindestens einer Stützrichtung (G1, G2), die zur Anlage- und zur Bewegungsrichtung (S, L) orthogonal ist, geführt wird.

7. Transportvorrichtung (20) nach einem der Ansprüche 3 bis 6, **dadurch gekennzeichnet, dass** sie zwei parallele Führungsschienen (38A, 38B) aufweist, die sich beiderseits des magnetischen Pfades (60) und des Streifens (52) aus ferromagnetischem Material in den Stützrichtungen (G1, G2) erstrecken.

8. Transportvorrichtung (20) nach einem der vorhergehenden Ansprüche, **dadurch gekennzeichnet, dass** mindestens ein Anlageorgan (32) von einer Laufrolle gebildet wird.

9. Transportvorrichtung (20) nach dem vorhergehenden Anspruch in Kombination mit Anspruch 6, **dadurch gekennzeichnet, dass** das Schiffchen (22) mindestens zwei Laufrollen mitführt, die Anlageorgane (32) bilden und von denen jede auf einer Laufbahn (40) einer zugeordneten Führungsschiene (38A, 38B) rollt, die in eine zur Anlagerichtung (S) entgegengesetzte Richtung gedreht ist.

10. Transportvorrichtung (20) nach einem der Ansprüche 8 oder 9 in Kombination mit Anspruch 7, **dadurch gekennzeichnet, dass** das Schiffchen (22) mindestens zwei Laufrollen mitführt, die Halteorgane (34) bilden und von denen jede auf einem Stützweg (42) einer zugeordneten Führungsschiene (38A, 38B) rollt.

11. Transportvorrichtung (20) nach einem der Ansprüche 6 bis 10, **dadurch gekennzeichnet, dass** die mindesten eine Stützrichtung (G1, G2) im Wesentlichen parallel zur Richtung der Erdschwerkraft verläuft.

12. Transportvorrichtung (20) nach einem der vorhergehenden Ansprüche, **dadurch gekennzeichnet, dass** der Kontaktantriebsabschnitt des Transportweges (36) eine Kreisbogenform aufweist, wobei der Mechanismus (40) zum Kontaktantrieb von mindestens einem motorisch angetriebenen Rad (40A, 40B) gebildet wird, das auf dem Drehbewegungsmittelpunkt des Kontaktantriebsabschnitts zentriert ist, wobei die Schuborgane (46) mit dem motorisch angetriebenen Rad (40A, 40B) drehfest verbunden angebracht sind.

13. Transportvorrichtung (20) nach dem vorhergehenden Anspruch, **dadurch gekennzeichnet, dass** jedes Schuborgan (46) von Rändern mindestens einer Gabel (45) gebildet wird, die durch Ineinandergreifen mit mindestens einem komplementären Erfassungsorgan (48) jedes Schiffchens (22) zusammenwirkt.

14. Vorrichtung (20) nach dem vorhergehenden Anspruch in Kombination mit Anspruch 4, **dadurch gekennzeichnet, dass** ein Boden der Gabel (45) ein Führungsorgan (51) bildet, da mit einem von dem Schiffchen (22) mitgeführten Anlageorgan (49) zusammenwirkt.

## Claims

1. Device (20) for conveying hollow bodies (12), for a container manufacturing installation (10), the conveying device (20) comprising:
- at least one shuttle (22) with at least one on-board member (24) for grasping a hollow body (12);
- at least one guide member (40, 51) for guiding the movements of the shuttle (22) in a movement direction (L) along a conveying path (36) through contact, in a bearing direction (S), with at least one bearing member (32, 49) on board the shuttle (22);
- at least one contact drive mechanism (44) for driving each shuttle (22) through contact along at least one contact drive portion of the conveying path (36), the drive mechanism (44) comprising at least one movable pushing member (46), which pushes the shuttle (22) through contact in the movement direction (L) along the conveying path (36);
**characterized in that** it comprises at least one strip (52) of ferromagnetic material, which is arranged along the contact drive portion, for producing, through magnetic interaction with at least one magnet (50) on board each shuttle (22), an attraction force (Fa1) that is sufficient to keep the shuttle (22) permanently bearing against the guide members (40, 51) in the bearing direction (S) orthogonal to the movement direction (L).

2. Conveying device (20) according to the preceding claim, **characterized in that** the shuttle (22) is in permanent unilateral contact against at least one guide member (40, 51) in the bearing direction (S) by means of at least one on-board bearing member (32).

3. Conveying device (20) according to either one of the preceding claims, **characterized in that** at least one guide member is formed by a track (40) of at least one guide rail (38A, 38B).

4. Conveying device (20) according to any one of the preceding claims, **characterized in that**, along the contact drive portion, at least one guide member (51) is supported by a pushing member (46).

5. Conveying device (20) according to any one of the preceding claims, **characterized in that** it comprises at least one linear motor (54) for moving the shuttles (22) along at least one magnetic drive portion of the conveying path (36), the linear motor (54) comprising a magnetic pathway (60) arranged along said portion and said at least one magnet (50) on board each shuttle (22), the magnetic pathway (60) being able to emit a controlled magnetic field that interacts with the magnet (50) to produce a motive force (Fm2) for moving the shuttle (22) along the conveying path and to produce an attraction force (Fa2) for attracting the shuttle (22) against the guide rails (38A, 38B) in the bearing direction (S).

6. Conveying device (20) according to any one of the preceding claims, **characterized in that** the shuttle (22) is guided by at least one on-board holding member (34) being in permanent contact with a support member (30, 46) in at least one support direction (G1, G2) orthogonal to the bearing and movement directions (S, L).

7. Conveying device (20) according to any one of Claims 3 to 6, **characterized in that** it comprises two parallel guide rails (38A, 38B), which extend on either side of the magnetic pathway (60) and of the strip (52) of ferromagnetic material in the support directions (G1, G2).

8. Conveying device (20) according to any one of the preceding claims, **characterized in that** at least one bearing member (32) is formed by a roller.

9. Conveying device (20) according to the preceding claim in combination with Claim 6, **characterized in that** the shuttle (22) has at least two on-board rollers, forming bearing members (32), each of which rolls on a track (40) of an associated guide rail (38A, 38B) that faces in an opposite direction to the bearing direction (S).

10. Conveying device (20) according to either one of Claims 8 and 9 in combination with Claim 7, **characterized in that** the shuttle (22) has at least two on-board rollers, forming holding members (34), each of which rolls on a support path (42) of an associated guide rail (38A, 38B).

11. Conveying device (20) according to any one of Claims 6 to 10, **characterized in that** the at least one support direction (G1, G2) is directed generally parallel to the direction of Earth's gravity.

12. Conveying device (20) according to any one of the preceding claims, **characterized in that** the contact drive portion of the conveying path (36) has the shape of a circular arc, the contact drive mechanism (40) being formed by at least one motor-driven wheel (40A, 40B) centred on the centre of rotation of the contact drive portion, the pushing members (46) being mounted for conjoint rotation with the motor-driven wheel (40A, 40B).

13. Conveying device (20) according to the preceding claim, **characterized in that** each pushing member (46) is formed by edges of at least one fork (45), which cooperates through meshing with at least one complementary gripping member (48) of each shuttle (22).

14. Device (20) according to the preceding claim in combination with Claim 4, **characterized in that** a bottom of the fork (45) forms a guide member (51), which cooperates with a bearing member (49) on board the shuttle (22).
